# EUROPÄISCHE PATENTSCHRIFT

(11) **EP 3 368 344 B1**
(45) Veröffentlichungstag und Bekanntmachung des Hinweises auf die Patenterteilung: **11.09.2019**
(21) Anmeldenummer: 16733986.0
(22) Anmeldetag: 04.07.2016
(51) Int. Cl.: B60C 11/03, B60C 11/16

(54) **FAHRZEUGLUFTREIFEN**
PNEUMATIC TIRE
PNEUMATIQUE

(30) Priorität: 29.10.2015 DE 102015221117
(43) Veröffentlichungstag der Anmeldung: 05.09.2018
(73) Patentinhaber: Continental Reifen Deutschland GmbH, 30165 Hannover (DE)
(72) Erfinder: WIESE, Klaus, 30559 Hannover (DE); HEINHAUPT, Torsten, 29223 Celle (DE); VELLINGA-WALLENHAUER, Marieken, 30982 Pattensen (DE); SCHLITTENHARD, Jan, 30900 Wedemark (DE)
(74) Vertreter: Finger, Karsten
(86) Internationale Anmeldenummer: PCT/EP2016/065638
(87) Internationale Veröffentlichungsnummer: WO 2017/071837

(56) Entgegenhaltungen:
- WO-A1-2009/147047
- WO-A1-2015/108081
- DE-A1-102009 044 547

## Beschreibung

Die Erfindung betrifft einen Fahrzeugluftreifen mit einem Laufstreifen, welcher durch Rillen, wie beispielsweise Umfangsrillen, Querrillen, Schrägrillen und dergleichen, voneinander getrennte Profilpositive, beispielsweise Profilblockreihen oder Profilbändern, aufweist, wobei Profilpositive mit in Spikelöchern positionierten Spikes vorgesehen sind, in welchen vom Spike ausgehend, sich in die beiden Umfangsrichtungen erstreckende, seichte, langgestreckte Vertiefungen als Reservoire zur Aufnahme der beim Kratzen des Spikes auf Eis entstehenden Eissplitter ausgebildet sind wobei die sich in die beiden Umfangsrichtungen erstreckenden Vertiefungen übereinstimmend ausgeführt sind.

Es ist bekannt und üblich, Laufstreifen von Fahrzeugluftreifen mit Spikes zu versehen, um unter winterlichen Fahrbedingungen die Kraftübertragung des Reifens auf schnee- und/oder eisbedeckten Fahrbahnen zu erhöhen. Die allgemeine Wirkungsweise von bespikten Reifen beruht dabei auf mehreren Effekten. Zum einen dringen Spikes in auf der Fahrbahn befindliches Eis ein und verzahnen sich in diesem mechanisch. Bei Brems- und Traktionsvorgängen treten darüber hinaus Relativbewegungen (Schlupf) zwischen dem Fahrzeugluftreifen und der eisbedeckten Fahrbahn auf, bei welchen die Spikes durch das Eis gezogen werden und dabei Rinnen in die Eisoberfläche fräsen. Die dabei anfallenden Eisspäne ("Eismehl") sammeln sich häufig um den jeweiligen Spike an, wodurch sowohl die Eisgriffwirkung des Spikes als auch die Eisgriffwirkung des den Spike umgebenden Gummimaterials des Laufstreifens leidet.

Um den negativen Auswirkungen der anfallenden Eisspäne entgegenzuwirken, ist es bekannt, zur Aufnahme der Eisspäne in unmittelbarer Nähe zum Spike seichte Vertiefungen als Ableitkanäle bzw. Reservoire vorzusehen. Derartige Ableitkanäle oder Vertiefungen sind in unterschiedlichen Ausgestaltungen bekannt.

Ein Fahrzeugluftreifen der eingangs genannten Art ist aus der WO 2015/108081 A1 bekannt. Der Laufstreifen des Reifens weist mit Spikes versehene Profilpositive auf, in welchen vom jeweiligen Spike ausgehend, sich in die beiden Umfangsrichtungen erstreckende, langgestreckte Vertiefungen ausgebildet sind. Die Vertiefungen erstrecken sich exakt in Umfangsrichtung oder zu dieser unter einem Winkel von bis zu 10° und münden in die das Profilpositiv in Umfangsrichtung begrenzenden Rillen ein.

Aus der WO 2009/147047 A1 ist ein Fahrzeugluftreifen mit einem Laufstreifen bekannt, welcher mit Spikes versehene Profilblöcke aufweist, wobei im Bereich jedes Spikes zumindest eine lokale, kanalförmige Vertiefung ausgebildet ist. Die Vertiefungen enden jeweils innerhalb des Profilblockes, wobei jede Vertiefung vom Spikeloch höchstens einen Abstand von 1,0 cm aufweist. Die Summe der Volumina der um einen Spike vorgesehenen Vertiefungen in mm³ ist größer oder gleich dem Produkt der Mindestquerschnittsfläche des über die Laufstreifenoberfläche hinausragenden Teils des Spikepins in mm² und der Länge einer Vertiefung. Die Volumina betragen beispielsweise je 70 mm³. Die Vertiefungen können gerade oder auch kurvenförmig ausgeführt sein, wobei die Querschnittsfläche jeder Vertiefung über den Verlauf der Vertiefung variieren kann und die Querschnittsfläche beim Spike vorzugsweise jeweils am geringsten ist.

Ein zur WO 2009/147047 A1 sehr ähnlicher Fahrzeugluftreifen ist aus der WO 2009/147046 A1 bekannt. Die Profilblöcke des Laufstreifens weisen Spikelöcher auf, um welche jeweils kanalförmige Vertiefungen vorgesehen sind, wobei jede kanalförmige Vertiefung in eine den jeweiligen Profilblock begrenzende Rille mündet. Die Summe der mittleren Querschnittsflächen der vorgesehenen Vertiefungen ist größer oder gleich der Mindestquerschnittsfläche des über die Laufstreifenoberfläche hinausragenden Teils des Spikepins.

Ein weiterer Fahrzeugluftreifen mit einem bespikten Laufstreifen ist aus der WO 2014/123181 A1 bekannt. Um jedes im Laufstreifen vorgesehene Spikeloch sind jeweils zwei bogenförmig verlaufende Vertiefungen ausgebildet, welche jeweils durch zwei auf die Spikeachse bezogene Radien begrenzt sind. Ferner ist um jedes Spikeloch eine dritte Vertiefung mit einem bogenförmigen Abschnitt vorgesehen, an dessen Ende jeweils ein kurzer gerader Abschnitt anschließt, welcher jeweils in eine den Profilblock begrenzende Querrille mündet.

Aus der DE 10 2009 044 547 A1 ist ein weiterer Fahrzeugluftreifen mit einem bespikten Laufstreifen bekannt. Die Profilblöcke des Laufstreifens weisen eine den Spike ringförmig umschließende Vertiefung auf, von welcher weitere kanalförmige Vertiefungen zu den den Profilblock begrenzenden Querrillen verlaufen. Die kanalförmigen Vertiefungen weisen jeweils eine Breite von 1,0 mm bis 5,0 mm und jeweils eine Tiefe von 0,5 mm bis 1,5 mm auf. Zwischen den kanalförmigen Vertiefungen ist jeweils eine zum Profilblock gehörende Rippe ausgebildet. Ein weiterer Fahrzeugluftreifen, dessen Laufstreifen Spikes mit ringförmig umlaufenden Vertiefungen aufweist, ist aus der WO 2013/092434 A1 bekannt.

Können die vorgesehenen Vertiefungen die Menge an anfallenden Eisspänen nicht vollständig aufnehmen, sammeln sich die Eisspäne zwischen dem Laufstreifen und der Fahrbahn, wodurch die Verzahnung der Spikes im Eis nicht optimal funktioniert und dementsprechend der Eisgriff leidet. Andererseits wirkt sich ein unnötig großes Volumen der vorgesehenen Vertiefungen nachteilig auf die Eisgriffeigenschaften der Profilpositive des Laufstreifens aus, da zu großvolumige Vertiefungen die Gummioberfläche der Profilpositive merklich reduziert. Da die Spikes je nach Art der eingangs erwähnten Relativbewegung zwischen Fahrzeugluftreifen und Eisfahrbahn je nach Beanspruchung und Beanspruchungsrichtung unterschiedlich lange Rinnen in die Eisoberfläche fräsen, welche unterschiedliche große Mengen an Eisspänen zur Folge haben, sind die im Bereich von Spikes vorgesehenen Ableitkanäle bzw. Vertiefungen der bekannten Fahrzeugluftreifen verbesserungswürdig.

Der Erfindung liegt daher die Aufgabe zugrunde, bei einem Reifen der eingangs genannten Art die um die Spikes vorgesehenen, als Eisreservoire dienenden Vertiefungen an die unterschiedlichen Beanspruchungen bei Traktion, beim Bremsen und beim Auftreten von Seitenkräften möglichst gut anzupassen.

Gelöst wird die gestellte Aufgabe erfindungsgemäß dadurch, dass vom Spike ausgehend sich zumindest eine weitere Vertiefung in axialer Richtung erstreckt, welche, bei mehreren Vertiefungen in Summe, ein kleineres Volumen aufweist als die sich in jede der Umfangsrichtungen erstreckende(n) Vertiefung(en), wobei die sich in die beiden Umfangsrichtungen erstreckenden Vertiefungen und die zumindest eine sich in axialer Richtung erstreckende Vertiefung die einzigen Vertiefungen pro Spike sind.

Die mittleren Gleitwege bei Traktion und unter ABS-Bremskrafübertragung sind vergleichsweise hoch, sodass bei solchen Kraftübertragungen die in der Eisoberfläche durch Spikes entstehenden Rinnen am längsten sind. Nachdem der Reifen gemäß beiden Abrollrichtungen - bei Vorwärtsfahrt - am Fahrzeug montiert werden kann, sind die Vertiefungen, welche sich in die beiden Umfangsrichtungen erstrecken, übereinstimmend ausgeführt. Im Mittel kurze Gleitwege über die Eisoberfläche weisen die Spikes bei durch Querschlupf auftretenden Relativbewegungen, bei Seitenkraftübertragung, auf. Gemäß der Erfindung erstreckt sich daher vom Spike aus zumindest eine Vertiefung in axialer Richtung, welche, bei mehreren Vertiefungen in Summe, ein kleineres Aufnahmevolumen aufweist als jeweils die Vertiefung(en), welche sich in eine der Umfangsrichtungen erstreckt bzw. erstrecken.

Bei gleicher Ausführung der Vertiefungen in allen Richtungen würde zu viel Volumen zur Verfügung stehen und die Reibleistung an der Gummioberfläche zu stark reduziert sein. Bei erfindungsgemäß gestalteten Vertiefungen sind die Volumina optimal an die durch die unterschiedlichen Relativbewegungen zwischen Spike und Eisfahrbahn anfallenden Mengen an Eisspänen angepasst.

Bei einer bevorzugten Ausführung der Erfindung ist der Laufstreifen derart ausgestaltet, dass er an beliebiger Achsposition und mit beliebiger Abrollrichtung am Fahrzeug montierbar ist. Bei einer solchen Ausführung ist es vorteilhaft, wenn die sich in axialer Richtung erstreckenden Vertiefungen in jeder Laufstreifenhälfte sich jeweils in Richtung zu der dem jeweiligen Spike näher befindlichen Reifenschulter erstrecken.

Bei einer weiteren Ausführung der Erfindung handelt es sich um einen Fahrzeugluftreifen, dessen Laufstreifen asymmetrisch gestaltet ist und eine definierte Außenschulter und eine definierte Innenschulter aufweist und welcher derart am Fahrzeug zu montieren ist, dass sich die Außenschulter an der Fahrzeuginnenseite befindet. Für die Seitenführungseigenschaften dieser Ausführung ist es besonders vorteilhaft, wenn sich sämtliche in axialer Richtung erstreckenden Vertiefungen von jedem Spike aus in Richtung zur Außenschulter erstrecken.

Bei einer bevorzugten Ausführungsform der Erfindung weisen die sich in die beiden Umfangsrichtungen erstreckenden Vertiefungen eine größere Erstreckungslänge auf als die sich in axialer Richtung erstreckende(n) Vertiefung(en). Es kann daher auch die Länge der Vertiefungen an die entsprechenden Gleitwege der Spikes bei den unterschiedlichen Beanspruchungen angepasst werden.

Eine optimale Aufnahme und Ableitung der sich auf Eis bildenden Eisspäne wird durch einige bevorzugte Ausführungen der Vertiefungen unterstützt bzw. sichergestellt. Zu diesen Ausführungen gehört, dass die Vertiefung(en), die sich in eine der Umfangsrichtungen erstreckt bzw. erstrecken, bei mehreren Vertiefungen in Summe, ein Volumen von 12 mm³ bis 13,3 mm³ aufweist bzw. aufweisen. Eine weitere, diesbezüglich vorteilhafte Maßnahme besteht darin, dass die Vertiefung(en), welche sich in axialer Richtung erstreckt bzw. erstrecken, bei mehreren Vertiefungen in Summe, ein Volumen von 9,5 mm³ bis 10,7mm³ aufweist bzw. aufweisen.

Wie bereits erwähnt ist auch die jeweilige Länge der Vertiefungen für eine optimale Aufnahme von Eisspänen von Bedeutung. In diesem Zusammenhang ist es besonders vorteilhaft, wenn die Vertiefung(en), welche sich in eine der Umfangsrichtungen erstreckt bzw. erstrecken, eine Erstreckungslänge von 4,9 mm bis 5,2 mm aufweist bzw. aufweisen und wenn ferner die Vertiefung(en), welche sich in axialer Richtung erstreckt bzw. erstrecken, eine Erstreckungslänge von 3,7 mm bis 4,2 mm aufweist bzw. aufweisen.

Besonders bevorzugt ist auch eine Ausführung, bei der die Vertiefungen zumindest über den Großteil ihrer Erstreckung eine Tiefe von 0,5 mm bis 1,0 mm aufweisen.

Darüber hinaus ist es besonders vorteilhaft, wenn die sich in die beiden Umfangsrichtungen erstreckenden Vertiefungen paarweise und zur gleichen Symmetrieachse spiegelsymmetrisch angeordnet sind, wobei vorzugsweise die Symmetrieachse unter einem Winkel von -20° bis +20° zur Umfangsrichtung verläuft.

Bevorzugt ist ferner eine Ausführung, bei der die sich vom Spike aus in axialer Richtung erstreckenden Vertiefungen paarweise und bezüglich einer Symmetrieachse spiegelsymmetrisch angeordnet sind.

Besonders ausgewogen ist eine Anordnung der erfindungsgemäßen Vertiefungen, bei welcher die Symmetrieachsen senkrecht zueinander verlaufen.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Draufsicht auf einen Abschnitt einer Abwicklung eines Laufstreifens eines Fahrzeugluftreifens mit einer Ausführungsvariante der Erfindung,
Fig. 2 eine vergrößerte Draufsicht auf einen Teilbereich eines Profilblockes,
Fig. 3 einen Schnitt entlang der Linie III-III der Fig. 2 und
Fig. 4 eine Draufsicht auf einen Abschnitt einer Abwicklung eines Laufstreifens eines Fahrzeugluftreifens mit einer weiteren Ausführungsvariante der Erfindung.

Erfindungsgemäße Fahrzeugluftreifen sind Winterreifen für Personenkraftwagen, Vans oder Light-Trucks mit Laufstreifen, die keine bevorzugte Abrollrichtung aufweisen. Die Erfindung ist auch bei Reifen mit asymmetrisch ausgeführten Laufstreifen einsetzbar, welche unterschiedliche Profilstrukturen in den Laufstreifenhälften aufweisen, sodass der Laufstreifen bei am Fahrzeug montiertem Reifen eine der Fahrzeugaußenseite zuzuordnende Seitenwand aufweist.

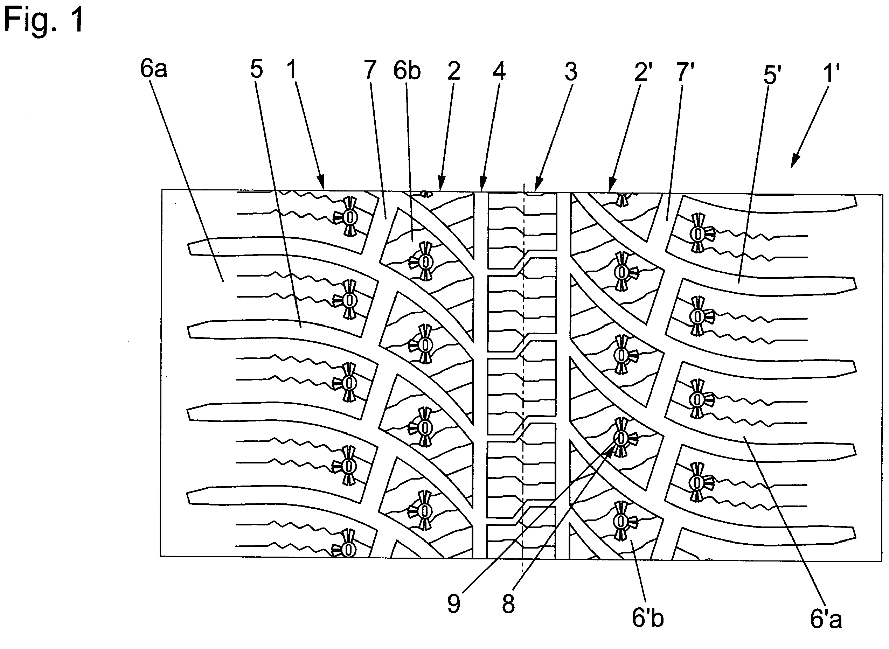

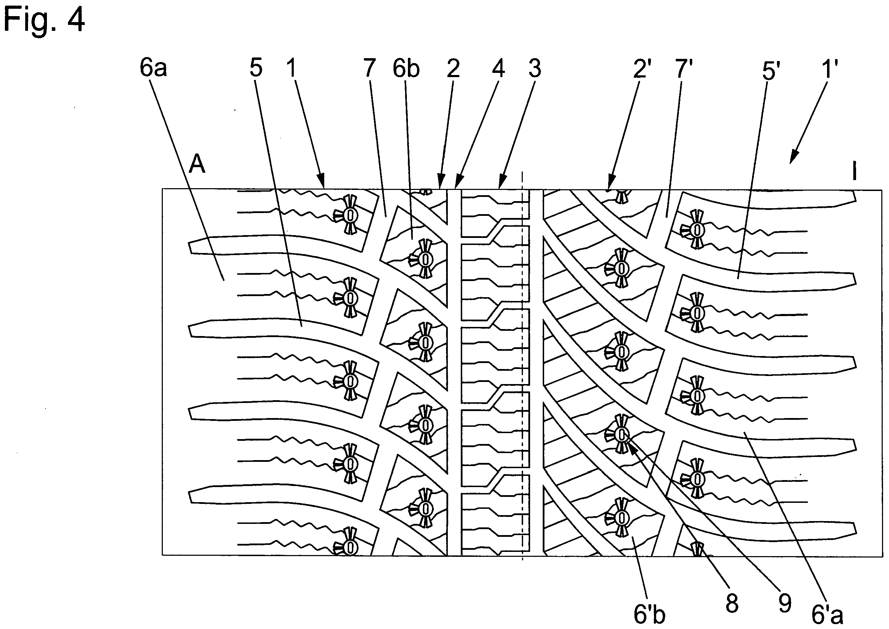

Die in Fig. 1 und Fig. 4 gezeigten Laufstreifen weisen jeweils zwei schulterseitige Blockreihen 1, 1', je eine an diese anschließende mittlere Blockreihe 2, 2' und im mittleren Laufstreifenbereich ein in Umfangsrichtung umlaufendes Profilband 3 auf, welches von den mittleren Blockreihen 2, 2'durch je eine in den gezeigten Ausführungsbeispielen gerade verlaufende Umfangsrille 4 getrennt ist. Bei der in Fig. 1 gezeigten Ausführung verläuft das Profilband 3 entlang der und symmetrisch zur zentralen Mittellinie des Laufstreifens, bei der in Fig. 4 gezeigten Ausführung gegenüber dieser versetzt. Dadurch weisen die beiden mittleren Blockreihen 2, 2' unterschiedliche axiale Erstreckungslängen auf und der Laufstreifen ist "asymmetrisch", das heißt er weist eine definierte Außenschulter A und eine definierte Innenschulter I auf. Ein Reifen mit einem solchen Laufstreifen ist derart am Fahrzeug zu montieren, dass sich die Außenschulter A an der Fahrzeugaußenseite befindet.

In beiden Laufstreifenhälften der in Fig. 1 und in Fig. 4 gezeigten Ausführungen verlaufen leicht bogenförmige Querrillen 5, 5', welche sich am Mündungsbereich zur Umfangsrille 4 unter einem Winkel von 30° bis 60° zur Umfangsrichtung erstrecken und im Bereich ihres schulterseitigen Auslaufes im Wesentlichen in axialer Richtung verlaufen. Die Profilblöcke 6a, 6'a der schulterseitigen Blockreihen 1,1' sind von den Profilblöcken 6b, 6'b der jeweils angrenzenden mittleren Blockreihe 2, 2' durch Schrägrillen 7, 7' getrennt, welche zwischen in Umfangsrichtung benachbarten Querrillen 5, 5' verlaufen.

Das Profilband 3 und die Profilblöcke 6a, 6'a, 6b, 6'b der Blockreihen 1, 1' und 2, 2' sind jeweils mit insbesondere in an sich bekannter Weise gestalteten Einschnitten versehen.

In den Profilblöcken 6a, 6b, 6'a, 6'b der Blockreihen 1, 1' und 2, 2' ist ferner jeweils ein Spikeloch 8 ausgebildet, in welches jeweils ein insbesondere in an sich bekannter Weise aus einem Spikekörper und einem Spikepin bestehender Spike 9 eingesetzt und verankert ist. Jedes Spikeloch 8 weist einen an den jeweiligen Spikekörper angepassten Durchmesser auf.

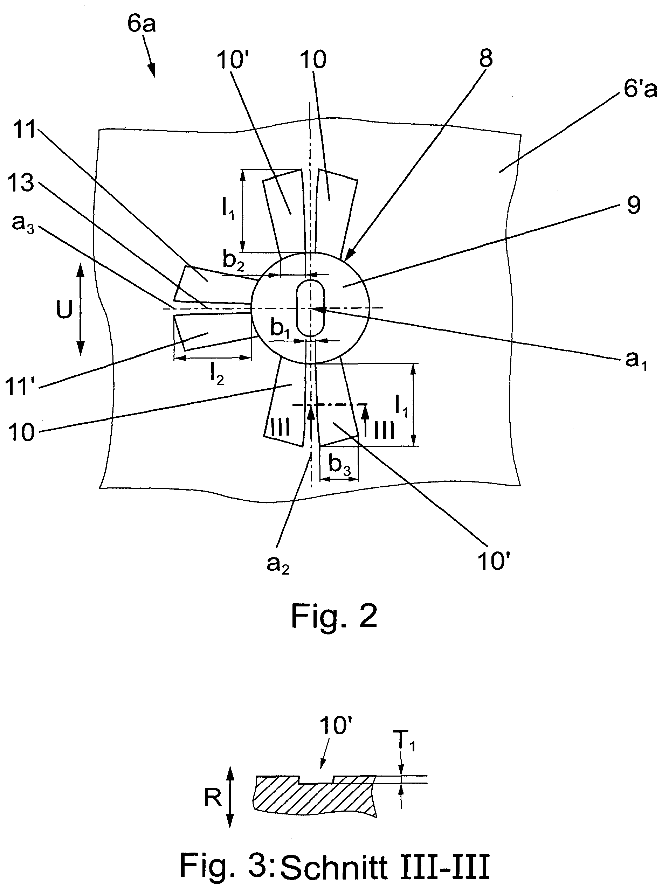

Fig. 2 zeigt eine Draufsicht auf einen Teilbereich eines Profilblockes 6a aus der in Fig. 1 und Fig. 4 linken schulterseitigen Blockreihe 1. Die Umfangsrichtung des Laufstreifens ist mit dem Doppelpfeil U gekennzeichnet. Die durch die Mitte des Spikes 9 verlaufende Spikeachse, welche mit a₁ bezeichnet ist, verläuft in radialer Richtung.

Um jeden Spike 9 bzw. jedes Spikeloch 8 sind oberflächlich langgestreckte und paarweise angeordnete Vertiefungen - zwei Paare von Vertiefungen 10, 10' und ein Paar von Vertiefungen, 11, 11' - ausgebildet, die als Reservoire zur Aufnahme der beim Abrollen des Reifens auf eisigem Untergrund absplitternden Eisspäne dienen. Vorzugsweise sind bei jedem Spike 9 die zu einem Paar gehörenden Vertiefungen 10, 10' sowie 11, 11' übereinstimmend ausgeführt und übereinstimmend orientiert. Das eine Paar von Vertiefungen 10, 10' erstreckt sich vom Spike 9 ausgehend in die eine Umfangsrichtung, das zweite Paar von Vertiefungen 10, 10' in die andere Umfangsrichtung. In jedem Paar von Vertiefungen 10, 10' weisen die Vertiefungen 10, 10' in Summe ein Volumen V₁ und jede Vertiefung 10, 10' jeweils eine Länge l₁ auf.

Das dritte Paar von Vertiefungen 11, 11' erstreckt sich vom Spike 9 in Richtung der näher befindlichen Reifenschulter, wobei diese Vertiefungen 11, 11' eine kleinere Länge l₂ und, in Summe, ein kleineres Volumen V₂ aufweisen. Die Länge l₁ der Vertiefungen 10, 10' beträgt 4,9 mm bis 5,2 mm, die Länge l₂ der Vertiefungen 11, 11' beträgt beträgt 3,7 mm bis 4,2 mm, wobei l₁ > l₂ gilt. Das Summenvolumen V₁ der Vertiefungen 10, 10' beträgt 12 mm³ bis 13,3 mm³, das Summenvolumen V₂ der Vertiefung 11, 11' beträgt 9,5 mm³ bis 10,7 mm³, sodass V₁ > V₂ gilt.

Die Volumina V₁ und V₂, der Vertiefungen 10, 10' und 11, 11" sind damit an die durch die unterschiedlichen Relativbewegungen zwischen Spike 9 und Eisfahrbahn anfallenden Mengen an Eisspänen angepasst, die Vertiefungen 10, 10' an jene bei Traktionskraftübertragung und ABS-Bremskraftübertragung und die Vertiefungen 11, 11' an jene bei Seitenkraftübertragung. Bei der in Fig. 1 gezeigten Ausführungsvariante erstrecken sich die Vertiefungen 11, 11' in jeder Laufstreifenhälfte jeweils in Richtung zur jeweils näher befindlichen Reifenschulter. Bei der in Fig. 4 gezeigten Ausführungsform erstrecken sich sämtliche Vertiefungen 11, 11' in Richtung zur Außenschulter A.

Sämtliche Vertiefungen 10, 10', 11, 11' weisen ferner zumindest über den Großteil ihrer Erstreckung eine Tiefe T₁ (Fig. 3) auf, die 0,5 mm bis 1,0 mm beträgt. Die Tiefe T₁ kann sich über die Längserstreckung der Vertiefungen 10, 10', 11, 11' insbesondere kontinuierlich, vergrößern oder verkleinern.

Bei den gezeigten Ausführungsvarianten grenzen sämtliche Vertiefungen 10, 10', 11, 11' an den bei der Vulkanisation verwendeten Moldpineinsatz an, wobei zwischen diesem und den Vertiefungen üblicherweise eine sehr dünne Gummihaut gebildet wird. Die zu einem Paar gehörenden Vertiefungen 10, 10', 11, 11' sind bezüglich in Draufsicht durch den Spikemittelpunkt verlaufende Symmetrieachsen a₂ und a₃ spiegelsymmetrisch zueinander ausgeführt und angeordnet.

Entsprechend ihrer diametralen Anordnung sind die beiden zu einem Paar gehörenden Vertiefungen 10, 10' zur gleichen Symmetrieachse a₂ spiegelsymmetrisch. Die Symmetrieachse a₂ verläuft, wie dargestellt, in Umfangsrichtung oder unter einem Winkel von -20° bis 20° zur Umfangsrichtung U. Die paarweise angeordneten Vertiefungen 11, 11' verlaufen bezüglich der Symmetrieachse a₃ spiegelsymmetrisch zueinander, welche bei der gezeigten, bevorzugten Ausführungsvariante senkrecht zur Symmetrieachse a₂ verläuft.

Die jeweils paarweise angeordneten Vertiefungen 10, 10', 11, 11' weisen an ihren dem Spike 9 benachbarten inneren Endbereichen jeweils einen gegenseitigen Abstand b₁ von 0,4 mm bis 0,6 mm, insbesondere von 0,5 mm, auf, wobei der gegenseitige Abstand bei der gezeigten Ausführungsvariante zu den äußeren Endbereichen der Vertiefungen 10, 10', 11, 11' jeweils um bis zu 1,0 mm, insbesondere um bis zu 0,5 mm, kontinuierlich zunimmt. Die Vertiefungen 10, 10', 11, 11' selbst weisen an ihren beim Spike 9 befindlichen inneren Endbereichen jeweils eine Breite b₂ auf, welche 1,0 mm bis 1,5 mm, insbesondere 1, 25 mm, beträgt, wobei ihre größte Breite b₃ an ihren äußeren Endbereichen 1,5 mm bis 2,5 mm beträgt.

Bei einer weiteren nicht dargestellten Ausführungsvariante ist anstelle von Paaren jeweils nur eine Vertiefung vorgesehen, wobei diese analog zur obigen Ausführung Volumina V₁ und V₂ aufweisen. Die äußere Form der Vertiefungen kann ferner von der dargestellten abweichen.

### Bezugsziffernliste

- 1, 1': Blockreihe
- 2, 2': Blockreihe
- 3: Profilband
- 4: Umfangsrille
- 5, 5': Querrille
- 6a, 6b, 6'a, 6'b: Profilblock
- 7, 7': Schrägrille
- 8: Spikeloch
- 9: Spike
- 10, 10', 11, 11': Vertiefung
- a₁: Spikeachse
- a₂, a₃: Symmetrieachse
- b₁: Abstand
- b₂: Breite
- b₃: Breite
- l₁, l₂: Länge
- T₁: Tiefe
- R: Radialrichtung
- U: Umfangsrichtung
- V₁, V₂: Volumen

## Patentansprüche

1. Fahrzeugluftreifen mit einem Laufstreifen, welcher durch Rillen, wie beispielsweise Umfangsrillen (4), Querrillen (5, 5'), Schrägrillen (7) und dergleichen, voneinander getrennte Profilpositive, beispielsweise Profilblockreihen oder Profilbänder, aufweist, wobei Profilpositive mit in Spikelöchern positionierten Spikes (9) vorgesehen sind, in welchen vom Spike (9) ausgehend, sich in die beiden Umfangsrichtungen (U) erstreckende, seichte, langgestreckte Vertiefungen (10, 10') als Reservoire zur Aufnahme der beim Kratzen des Spikes auf Eis entstehenden Eissplitter ausgebildet sind, wobei die sich in die beiden Umfangsrichtungen (U) erstreckenden Vertiefungen (10, 10') übereinstimmend ausgeführt sind,
**dadurch gekennzeichnet,**
**dass** sich vom Spike (9) ausgehend zumindest eine weitere Vertiefung (11, 11') in axialer Richtung erstreckt, welche, bei mehreren Vertiefungen (11, 11') in Summe, ein kleineres Volumen (V₂) aufweist als die sich in jede der Umfangsrichtungen (U) erstreckende(n) Vertiefung(en) (10, 10'), wobei die sich in die beiden Umfangsrichtungen (U) erstreckenden Vertiefung(en) (10, 10') und die zumindest eine sich in axialer Richtung erstreckende Vertiefung (11, 11') die einzigen Vertiefungen pro Spike (9) sind.

2. Fahrzeugluftreifen nach Anspruch 1, **dadurch gekennzeichnet, dass** sich die in axialer Richtung erstreckenden Vertiefungen (11, 11') in jeder Laufstreifenhälfte jeweils in Richtung zu der dem jeweiligen Spike (9) näher befindlichen Reifenschulter erstrecken.

3. Fahrzeugluftreifen nach Anspruch 1, dessen Laufstreifen asymmetrisch gestaltet ist und eine definierte Außenschulter (A) und eine definierte Innenschulter (I) aufweist und welcher derart am Fahrzeug zu montieren ist, dass sich die Außenschulter (A) an der Fahrzeugaußenseite befindet, **dadurch gekennzeichnet, dass** sich sämtliche in axialer Richtung erstreckenden Vertiefungen (11, 11')von jedem Spike (9 aus) in Richtung zur Außenschulter (A) erstrecken.

4. Fahrzeugluftreifen nach einem der Ansprüche 1 bis 3, **dadurch gekennzeichnet, dass** die sich in die beiden Umfangsrichtungen erstreckenden Vertiefungen (10, 10') eine größere Erstreckungslänge (l₁) aufweisen als die sich in axialer Richtung erstreckende(n) Vertiefung(en) (11, 11').

5. Fahrzeugluftreifen nach einem der Ansprüche 1 bis 4, **dadurch gekennzeichnet, dass** die Vertiefung(en) (10, 10'), welche sich in eine der Umfangsrichtungen erstreckt bzw. erstrecken, bei mehreren Vertiefungen in Summe, ein Volumen (V₁) von 12 mm³ bis 13,3 mm³ aufweist bzw. aufweisen.

6. Fahrzeugluftreifen nach einem der Ansprüche 1 bis 5, **dadurch gekennzeichnet, dass** die Vertiefung(en) (11, 11'), welche sich in axialer Richtung erstreckt bzw. erstrecken, bei mehreren Vertiefungen in Summe, ein Volumen (V₂) von 9,5 mm³ bis 10,7 mm³ aufweist bzw. aufweisen.

7. Fahrzeugluftreifen nach einem der Ansprüche 1 bis 6, **dadurch gekennzeichnet, dass** die Vertiefung(en) (10, 10'), welche sich in eine der Umfangrichtungen erstreckt bzw. erstrecken, eine Erstreckungslänge (l₁) von 4,9 mm bis 5,2 mm aufweist bzw. aufweisen.

8. Fahrzeugluftreifen nach einem der Ansprüche 1 bis 6, **dadurch gekennzeichnet, dass** die Vertiefung(en) (11, 11'), welche sich in axialer Richtung erstreckt bzw. erstrecken, eine Erstreckungslänge (l₂) von 3,7 mm bis 4,2 mm aufweist bzw. aufweisen.

9. Fahrzeugluftreifen nach einem der Ansprüche 1 bis 8, **dadurch gekennzeichnet, dass** die Vertiefungen (10, 10', 11, 11') zumindest über den Großteil ihrer Erstreckung eine Tiefe (T₁) von 0,5 mm bis 1,0 mm aufweisen.

10. Fahrzeugluftreifen nach einem der Ansprüche 1 bis 9, **dadurch gekennzeichnet, dass** die sich in die beiden Umfangsrichtungen erstreckenden Vertiefungen (10,10') paarweise und zur gleichen Symmetrieachse (a₂) spiegelsymmetrisch angeordnet sind.

11. Fahrzeugluftreifen nach Anspruch 10, **dadurch gekennzeichnet, dass** die Symmetrieachse (a₂) unter einem Winkel von -20° bis 20° zur Umfangsrichtung verläuft.

12. Fahrzeugluftreifen nach einem der Ansprüche 1 bis 11, **dadurch gekennzeichnet, dass** die sich vom Spike (9) in axialer Richtung erstreckenden Vertiefungen (11, 11') paarweise und bezüglich einer Symmetrieachse (a₂) spiegelsymmetrisch angeordnet sind.

13. Fahrzeugluftreifen nach einem der Ansprüche 10 bis 12, **dadurch gekennzeichnet, dass** die Symmetrieachsen (a₂, a₃) senkrecht zueinander verlaufen.

14. Fahrzeugluftreifen nach einem der Ansprüche 1 bis 13, **dadurch gekennzeichnet, dass** die Vertiefungen (10, 10', 11, 11') innerhalb des Profilpositivs enden.

## Claims

1. Pneumatic vehicle tyre with a tread, which has profile positives, for example rows of profile blocks or profile strips that are separated from one another by grooves, such as for example circumferential grooves (4), transverse grooves (5, 5'), oblique grooves (7) and the like, wherein profile positives with spikes (9) positioned in spike holes are provided, in which, starting from the spike (9), shallow elongated recesses (10, 10') extending in the two circumferential directions (U) are formed as reservoirs for receiving the shards of ice produced when the spike scrapes on ice, wherein the recesses (10, 10') extending in the two circumferential directions (U) are configured so as to correspond,
**characterized**
**in that**, starting from the spike (9), at least one further recess (11, 11') extends in the axial direction and, when there are a number of recesses (11, 11') in total, has a smaller volume (V₂) than the recess (es) (10, 10') extending in each of the circumferential directions (U), wherein the recess(es) (10, 10') extending in the two circumferential directions (U) and the at least one recess (11, 11') extending in the axial direction are the only recesses per spike (9).

2. Pneumatic vehicle tyre according to Claim 1, **characterized in that** the recesses (11, 11') extending in the axial direction in each half of the tread respectively extend in the direction of the tyre shoulder located closer to the respective spike (9) .

3. Pneumatic vehicle tyre according to Claim 1, the tread of which is asymmetrically designed and has a defined outer shoulder (A) and a defined inner shoulder (I) and which is to be fitted on the vehicle in such a way that the outer shoulder (A) is on the outer side of the vehicle, **characterized in that** all of the recesses (11, 11') extending in the axial direction extend from each spike (9) in the direction of the outer shoulder (A).

4. Pneumatic vehicle tyre according to one of Claims 1 to 3, **characterized in that** the two recesses (10, 10') extending in the two circumferential directions have a greater length of extent (l₁) than the recess (es) (11, 11') extending in the axial direction.

5. Pneumatic vehicle tyre according to one of Claims 1 to 4, **characterized in that**, when there are a number of recesses in total, the recess(es) (10, 10') that extends or extend in one of the circumferential directions has or have a volume (V₁) of 12 mm³ to 13.3 mm³.

6. Pneumatic vehicle tyre according to one of Claims 1 to 5, **characterized in that**, when there are a number of recesses in total, the recess(es) (11, 11') that extends or extend in the axial direction has or have a volume (V₂) of 9.5 mm³ to 10.7 mm³.

7. Pneumatic vehicle tyre according to one of Claims 1 to 6, **characterized in that** the recess(es) (10, 10') that extends or extend in one of the circumferential directions has or have a length of extent (l₁) of 4.9 mm to 5.2 mm.

8. Pneumatic vehicle tyre according to one of Claims 1 to 6, **characterized in that** the recess(es) (11, 11') that extends or extend in the axial direction has or have a length of extent (l₂) of 3.7 mm to 4.2 mm.

9. Pneumatic vehicle tyre according to one of Claims 1 to 8, **characterized in that** the recesses (10, 10', 11, 11') have at least over the majority of their extent a depth (T₁) of 0.5 mm to 1.0 mm.

10. Pneumatic vehicle tyre according to one of Claims 1 to 9, **characterized in that** the recesses (10, 10') extending in the two circumferential directions are arranged in pairs and mirror-symmetrically in relation to the same axis of symmetry (a₂).

11. Pneumatic vehicle tyre according to Claim 10, **characterized in that** the axis of symmetry (a₂) runs at an angle of -20° to 20° in relation to the circumferential direction.

12. Pneumatic vehicle tyre according to one of Claims 1 to 11, **characterized in that** the recesses (11, 11') extending in the axial direction from the spike (9) are arranged in pairs and mirror-symmetrically with respect to an axis of symmetry (a₂).

13. Pneumatic vehicle tyre according to one of Claims 10 to 12, **characterized in that** the axes of symmetry (a₂, a₃) run perpendicularly in relation to one another.

14. Pneumatic vehicle tyre according to one of Claims 1 to 13, **characterized in that** the recesses (10, 10', 11, 11') end within the profile positive.

## Revendications

1. Pneumatique de véhicule comprenant une bande de roulement qui présente des parties profilées positives, par exemple des rangées de blocs profilés ou des bandes profilées, séparées les unes des autres par des rainures, par exemple des rainures périphériques (4), des rainures transversales (5, 5'), des rainures obliques (7) et similaires, des parties profilées positives étant prévues avec des crampons (9) positionnés dans des trous de crampons, dans lesquels sont réalisés des renfoncements peu profonds, allongés (10, 10'), s'étendant à partir du crampon (9), dans les deux directions périphériques (U), en tant que réservoirs pour recevoir les copeaux de glace formés lorsque le crampon mord la glace, les renfoncements (10, 10') s'étendant dans les deux directions périphériques (U) étant réalisés de manière à coïncider,
**caractérisé en ce que**
au moins un renfoncement supplémentaire (11, 11') s'étend dans la direction axiale à partir du crampon (9), lequel, dans le cas de plusieurs renfoncements (11, 11'), présente en totalité un plus petit volume (V₂) que le ou les renfoncements (10, 10') s'étendant dans chacune des directions périphériques (U), le ou les renfoncements (10, 10') s'étendant dans les deux directions périphériques (U) et l'au moins un renfoncement (11, 11') s'étendant dans la direction axiale étant les seuls renfoncements par crampon (9).

2. Pneumatique de véhicule selon la revendication 1, **caractérisé en ce que** les renfoncements (11, 11') s'étendant dans la direction axiale s'étendent dans chaque moitié de la bande de roulement à chaque fois dans la direction de l'épaulement du pneu se trouvant le plus près du crampon respectif (9) .

3. Pneumatique de véhicule selon la revendication 1, dont la bande de roulement est configurée sous forme asymétrique et présente un épaulement extérieur défini (A) et un épaulement intérieur défini (I), et lequel doit être monté sur le véhicule de telle sorte que l'épaulement extérieur (A) se trouve sur le côté extérieur du véhicule, **caractérisé en ce que** tous les renfoncements (11, 11') s'étendant dans la direction axiale s'étendent depuis chaque crampon (9) dans la direction de l'épaulement extérieur (A).

4. Pneumatique de véhicule selon l'une quelconque des revendications 1 à 3, **caractérisé en ce que** les renfoncements (10, 10') s'étendant dans les deux directions périphériques présentent une plus grande longueur d'étendue (l₁) que le ou les renfoncements (11, 11') s'étendant dans la direction axiale.

5. Pneumatique de véhicule selon l'une quelconque des revendications 1 à 4, **caractérisé en ce que** le ou les renfoncements (10, 10') qui s'étend ou s'étendent dans l'une des directions périphériques présente ou présentent, dans le cas de plusieurs renfoncements, en totalité un volume (V₁) de 12 mm³ à 13,3 mm³.

6. Pneumatique de véhicule selon l'une quelconque des revendications 1 à 5, **caractérisé en ce que** le ou les renfoncements (11, 11') qui s'étend ou s'étendent dans la direction axiale, dans le cas de plusieurs renfoncements, présente ou présentent en totalité un volume (V₂) de 9,5 mm³ à 10,7 mm³.

7. Pneumatique de véhicule selon l'une quelconque des revendications 1 à 6, **caractérisé en ce que** le ou les renfoncements (10, 10') qui s'étend ou s'étendent dans l'une des directions périphériques présente ou présentent une longueur d'étendue (l₁) de 4,9 mm à 5,2 mm.

8. Pneumatique de véhicule selon l'une quelconque des revendications 1 à 6, **caractérisé en ce que** le ou les renfoncements (11, 11') qui s'étend ou s'étendent dans la direction axiale présente ou présentent une longueur d'étendue (l₂) de 3,7 mm à 4,2 mm.

9. Pneumatique de véhicule selon l'une quelconque des revendications 1 à 8, **caractérisé en ce que** les renfoncements (10, 10', 11, 11') présentent au moins sur la majeure partie de leur étendue une profondeur (T₁) de 0,5 mm à 1,0 mm.

10. Pneumatique de véhicule selon l'une quelconque des revendications 1 à 9, **caractérisé en ce que** les renfoncements (10, 10') s'étendant dans les deux directions périphériques sont disposés par paires et avec une symétrie spéculaire par rapport au même axe de symétrie (a₂).

11. Pneumatique de véhicule selon la revendication 10, **caractérisé en ce que** l'axe de symétrie (a₂) s'étend suivant un angle de -20° à 20° par rapport à la direction périphérique.

12. Pneumatique de véhicule selon l'une quelconque des revendications 1 à 11, **caractérisé en ce que** les renfoncements (11, 11') s'étendant depuis le crampon (9) dans la direction axiale sont disposés par paires et avec une symétrie spéculaire par rapport à un axe de symétrie (a₂).

13. Pneumatique de véhicule selon l'une quelconque des revendications 10 à 12, **caractérisé en ce que** les axes de symétrie (a₂, a₃) s'étendent perpendiculairement l'un à l'autre.

14. Pneumatique de véhicule selon l'une quelconque des revendications 1 à 13, **caractérisé en ce que** les renfoncements (10, 10', 11, 11') se terminent à l'intérieur de la partie profilée positive.
